# EUROPÄISCHE PATENTSCHRIFT

(11) **EP 1 062 314 B1**
(45) Veröffentlichungstag und Bekanntmachung des Hinweises auf die Patenterteilung: **17.09.2003**
(21) Anmeldenummer: 99911730.2
(22) Anmeldetag: 03.03.1999
(51) Int. Cl.: C11D 11/00, C11D 3/43, C11D 3/02, C11D 3/20, C09J 5/02

(54) **REINIGUNGSMITTEL FÜR PVC-OBERFLÄCHEN**
CLEANING AGENT FOR PVC SURFACES
DETERGENT POUR SURFACES EN PVC

(30) Priorität: 12.03.1998 DE 19810663
(43) Veröffentlichungstag der Anmeldung: 27.12.2000
(73) Patentinhaber: Henkel Dorus GmbH & Co. KG, 73441 Bopfingen (DE)
(72) Erfinder: ROGMANN, Karl-Heinz, D-40880 Ratingen (DE); KLEINERT, Horst, D-01458 Ottendorf-Okrilla (DE); HOFFMANN, Horst, D-73441 Bopfingen (DE); GEHRKE, Jörg, D-01099 Dresden (DE)
(74) Vertreter: Mathes, Nikolaus, Dr.
(86) Internationale Anmeldenummer: EP9901367
(87) Internationale Veröffentlichungsnummer: WO99046358

(56) Entgegenhaltungen:
- WO-A-97/29084
- DD-A- 218 776
- DE-A- 3 807 668
- DE-A- 4 343 468
- DATABASE WPI Week 9813 Derwent Publications Ltd., London, GB; AN 98-136449 XP002108526 & JP 10 012584 A (MITSUBISHI CHEM.), 16. Januar 1998 (1998-01-16)
- DATABASE WPI Week 9243 Derwent Publications Ltd., London, GB; AN 92-355193 XP002108527 & JP 04 259387 A (MIYOSHI YUSHI), 14. September 1992 (1992-09-14)

## Beschreibung

Die Erfindung betrifft ein Reinigungsmittel für PVC-Oberflächen und seine Verwendung, vor allem zur Reinigung vor einer nachfolgenden Verklebung.

Bekanntlich hat die Oberflächenbehandlung vor der Verklebung einen entscheidenden Einfluß auf die Qualität für die Haftung einer nachfolgenden Beschichtung oder Verklebung. Dazu zählt a) die Oberflächenvorbereitung durch Säubern, Passendmachen und Entfetten sowie b) die Oberflächenvorbehandlung auf mechanischem, physikalischem, chemischem oder elektrochemischem Wege wie z.B. Koronabehandlung. Beflammung und Auftrag von Haftvermittlern oder Primern (siehe Habenichts "Kleben: Grundlagen, Technologie, Anwendung" Springer-Verlag, 3. Aufl. (1997). Seiten 495 bis 512).

Zur Oberflächenbehandlung von PVC-Gegenständen werden ChlorKohlenwasserstoffe verwendet, z.B. Methylenchlorid. Diese Reinigungsmittel gefährden jedoch die Umwelt. Zur Beseitigung dieses Nachteils wurde in der DE 43 43 468 vorgeschlagen, PVC-Profile mit einer Ional/Multiional-Korona-Behandlung für eine spätere Verklebung mit einem PU-Schmelzklebstoff vorzubereiten und dann eine PVC-Folie aufzukalandrieren. Damit werden zumindest gleich gute Festigkeiten erzielt wie mit einer Reinigung mit Chlorkohlenwasserstoffen.
Beide Oberflächenbehandlungen könnten jedoch bezüglich der Beständigkeit der Verklebung, z.B. bei Einwirkung von Wärme und Klima-Wechsel verbessert werden.

Es bestand also ein Bedarf nach einer Oberflächenbehandlung von PVC-Gegenständen, insbesondere von PVC-Profilen ohne Chlorkohlenwasserstoffe zur Verbesserung der Beständigkeit der Haftung, sei es einer Verklebung oder einer Beschichtung.

Die Lösung ist den Patentansprüchen zu entnehmen. Sie besteht in einem wäßrigen alkalischen Reinigungsmittel mit folgender Zusammensetzung:
A) 2 bis 30 Gew.-% einer in wäßrigem Medium alkalisch reagierenden Verbindung,
B) 1 bis 30 Gew.-% eines Komplexbildners,
C) 5 bis 40 Gew.-% einer Verbindung mit zumindest einer Hydroxy-Gruppe, ausgewählt aus Alkoholen mit 3 bis 12C-Atomen in Molekül, Ethern von Polyolen, Ethern von Oligopropylen-Glykolen oder deren Mischungen
D) 1 bis 15 Gew.-% eines Tensids auf der Basis von Fettalkoholen,
E) 1 bis 30 Gew.-% eines Spülhilfsmittels ausgewählt aus Phosphaten, Sulfonaten der Typs Cumol- und Toluol-Sulfonat oder Phosphorsäureestern und
F) 0 bis 8 Gew.-% an wasserlöslichen Farbstoffen und Gerüststoffen.
G) 20 bis 80 Gew.-% an Wasser.

Die Gewichtsprozent beziehen sich auf das Reinigungsmittel insgesamt. Es ist aber auch möglich, eine Stammlösung in hoher Konzentration herzustellen, die dann vor Gebrauch auf die angegebene Konzentration durch Zugabe von Wasser verdünnt wird. Die Mengenangaben müssen sich jeweils zu 100 Gew.-% ergänzen.

Unter einer Verbindung, die in wäßrigem Medium alkalisch reagiert, sind sowohl starke als auch schwache, sowohl flüchtige als auch fixe alkalisch reagierende Verbindungen zu verstehen, also Hydroxide und Salze schwacher Säuren von Alkali- und Erdalkali-Metallen sowie Amine und Ammoniak. Bevorzugt sind NaOH, KOH, Wasserglas, Ammoniak und Amine, insbesondere eine Kombination von flüchtigen und fixen Verbindungen. Unter flüchtigen alkalisch reagierenden Stoffen sind zu verstehen Stoffe, die in wäßriger Lösung einen pH-Wert von > 7 besitzen und bei Raumtemperatur bzw. leicht erhöhten Temperaturen verflüchtigen. Das Verhältnis von flüchtigen und fixen alkalisch reagierenden Verbindungen soll im Bereich von 10 : 1 bis 1 : 10, vorzugsweise im Bereich von 2 : 1 bis 1 : 2 liegen.

Die Konzentration der alkalisch reagierenden Verbindungen insgesamt liegt vorzugsweise im Bereich von 5 bis 15 Gew.-%.
Der pH-Wert des Reinigungsmittels sollte über 12, vorzugsweise über 13 liegen, insbesondere im Bereich von 13,5 bis 14,0.

Als Komplexbildner sind Verbindungen zu verstehen, die zur Komplexierung und Maskierung von Metallen befähigt sind. Dazu zählen vorzugsweise Na- oder Ammoniumsalze von Diethylentriaminpentaessigsäure (DTPA), Hydroxyethylendiamintriessigsäure (HEDTA), Propylendiamintetraessigsäure (PPTA), Ethylendiamintetraessigsäure (EDTA), Nitrilotriessigsäure (NTA), Zitronensäure, Alanindiessigsäure, Polyasparaginsäure und Methylglycidindiessigsäure sowie Polycarboxylate und deren Mischungen. Bevorzugte Komplexbildner sind Nitrilotriessigsäure-Na und Alanindiessigsäure-Na. Sie sind teilweise käuflich zu erwerben unter dem Namen Trilon A® und Trilon M®.
Die Komplexbildner werden vorzugsweise in einer Konzentration von 2 bis 10 Gew.-% eingesetzt. Von besonderer Bedeutung ist das Gewichtsverhältnis von Komplexbildnern : alkalisch reagierenden Stoffen. Es sollte im Bereich von 2 : 1 bis 1 : 8 liegen.

Die Verbindung mit zumindest einer Hydroxy-Gruppe ist ein Alkohol, insbesondere ein höherer Alkohol. Die Anzahl der Hydroxy-Gruppen beträgt 1 bis 12, vorzugsweise höchstens zwei. Unter höheren Alkoholen sind Alkohole mit 3 bis 12 C-Atomen im Molekül zu verstehen. Konkrete Beispiele sind Benzylalkohol und Phenoxyethanol. Aber auch Ether von Polyolen zählen zu den höheren Alkoholen, z.B. Propylenglykol-n-Butylether, -Methylether, -Isobutylether und -Phenylether. Weiterhin zählen dazu Ether von Oligopropylen-Glykolen, z.B. Dipropylenglykol-Methylether und Tripropylenglykol-Methylether sowie Ethyl- bzw. Methyl-Diglykole. Zu den Glykolen zählen insbesondere Butylglykol und Butyldiglykol sowie Ethylenglykol. Diese Verbindungen mit zumindest einer Hydroxy-Gruppe werden vorzugsweise in einer Menge von 15 bis 25 Gew.-% eingesetzt, sei es einzeln oder in Mischung.

Bei den Fettalkoholen für die Tenside handelt es sich vor allem um Fettalkohole mit 8 bis 18, insbesondere 12 bis 18 C-Atomen. Es können aber auch Oxoalkohole mit 8 bis 18, insbesondere mit 9 bis 13 C-Atomen verwendet werden. Diese Fettalkohole sind mit hydrophilen Stoffen umgesetzt. So sind z.B. Fettalkohole mit 12 bis 18 C-Atomen mit 3 bis 50 Ethylenoxid-Einheiten verethert sowie gegebenenfalls noch mit 1 bis 15 Propylenoxideinheiten. Die Fettalkoholalkoxylate können in endgruppenverschlossener Form verwendet werden. Sie können durch Sulfatierung zu Fettalkoholethersulfaten oder durch Sulfonierung zu Fettalkoholether-Sulfonaten umgesetzt sein.
Weitere hydrophile Stoffe sind z.B. Glukose. Bevorzugte Fettalkohol-Tenside sind Alkylpolyglykoside, z.B. Glucopon und Plantaren sowie Intensol.
Die bevorzugte Konzentration der Fettalkohol-Tenside beträgt 2 bis 8 Gew.-%.
Neben den Fettalkohol-Tensiden werden noch Spülhilfsmittel eingesetzt.

Bei den Spülhilfsmitteln handelt es sich um Stoffe, die bestimmte Effekte, z.B. lösevermittelnde Mischung erzielen sollen. Konkrete Spülhilfsmittel sind einerseits Phosphate und andererseits Sulfonate des Typs Cumol- und Toluol-Sulfonat. Weitere brauchbare Spülhilfsmittel sind Phosphorsäureester. Derartige Stoffe werden üblicherweise bei Spülmitteln als Tenside oder Gerüststoffe eingesetzt. Konkret seien genannt: Pentanatriumtriphosphat, Alkylbenzol-, Alkan- und/oder Ester-Sulfonate.

Die Wasserkonzentration liegt im allgemeinen im Bereich von 20 bis 80. insbesondere von 50 bis 60 Gew.-%.

Neben diesen wesentlichen Komponenten des Reinigungsmittels können noch Stoffe zugesetzt werden, um bestimmte Anforderungen in Einzelfällen zu erfüllen. z.B. Farbstoffe, Duftstoffe, Gerüststoffe.

Die erfindungsgemäße Zusammensetzung eignet sich überraschenderweise gut zur Reinigung von PVC-Oberflächen für nachfolgende Verklebungen oder Beschichtungen. Die Haftung auf der PVC-Oberfläche wird nachweislich beständiger gegen Einwirkungen von Wärme und Klimaschwankungen. Das wird besonders deutlich bei PVC-Profilen. PVC-Profile sind wegen ihrer leichten Herstellung nach dem Extrusions-Verfahren sowie wegen ihren niedrigen Kosten und guten Gebrauchseigenschaften weit verbreitet, sei es als Voll-, Hohl- oder Kern-Profile. Das dazu verwendete PVC kann sowohl Weich- als auch Halbfestoder Hart-PVC sein. Zur Verbesserung und vor allem zur Verschönerung der Profile wird ihre Oberflächen behandelt. PVC-Profile werden üblicherweise eingesetzt in der Bau- und Möbelindustrie, z.B. als Sockelleisten, Stoßkanten, Gleitschienen, Vorhangschienen, Fensterrahmen, Fensterdichtungen, Türkanten, Türrahmen, Rolläden, Balkon-Verkleidung, Trennwände, Paneelen, Fassadenverkleidungen, Treppenkanten, Treppenhandläufe, Umrandungen für Tische und Türen usw.. Auch in der Automobil-, Kühlmöbel- und Gerätebau-Industrie werden sie eingesetzt z.B. als Zierleisten, Abdeck- und Dichtungsprofile.

Zweckmäßigerweise werden die PVC-Oberflächen mit der erfindungsgemäßen Zusammensetzung auf folgende Weise gereinigt:
- Das Reinigungsmittel wird nach üblichen Methoden aufgetragen, z.B. durch Aufsprühen oder mit Hilfe eines Filzes, Schwammes, Textils, Pinsels oder Rakels.
- Es ist vorteilhaft, wenn die Temperatur oberhalb der Raumtemperatur liegt, dann kann nämlich die Reinigung intensiviert und verkürzt werden. Die Temperatur des Reinigungsmittels sollte bei 10 bis 80 °C, vorzugsweise bei 40 bis 60 °C liegen.
- Die Einwirkzeit des erfindungsgemäßen Reinigungsmittels kann 1 sec bis 30 min betragen.
- Das Reinigungsmittel wird mit fließendem Wasser abgespült. Das Spülwasser kann auch im Kreislauf gefahren werden.
- Nach dem Spülen wird das Profil mit Warmluft, Wärmestrahlen oder ähnlichen Methoden getrocknet.

Die Reinigung der PVC-Oberfläche mit dem alkalischen Reinigungsmittel erfolgt vorteilhafterweise im Durchlauf, wobei die Durchlaufgeschwindigkeiten 1 bis 25 m/min betragen kann. Die Reinigung kann inline in einem Folienkaschierprozeß erfolgen. Es kann aber auch eine separate Reinigung vorgenommen und dann die Folienkaschierung nach Zwischenlagerung durchgeführt werden.

Die gereinigte PVC-Oberfläche kann ohne weitere Vorbehandlung beschichtet oder verklebt werden. Zweckmäßigerweise wird sie jedoch auf bekannte Art vorbehandelt. So eignet sich dafür z.B. die Korona-Oberflächenvorbehandlung. Durch diese Behandlung unter Luftatmosphäre bei Normaldruck wird die Oberfläche des Profils aufgrund von Hochspannungsentladungen in den obersten Atomlagen mehr oder weniger oxidiert. Dadurch werden die Benetzungs- und damit auch die Hafteigenschaften verbessert. Eine normale Korona-Behandlung ist auf Profilen nicht möglich. Vorzugsweise wird daher die Korona-Behandlung nach dem Verfahren und mit Hilfe der lonal- bzw. Multiional-Elektroden der Firma Softal durchgeführt.

Eine weitere vorteilhafte Möglichkeit der Korona-Oberflächenvorbehandlung ist das Freistrahlsystem zur Plasma-Korona-Vorbehandlung, wie es von der Firma Argodyn Hochspannungstechnik GmbH beschrieben wird. Die Korona wird in der sogenannten Korona-Düse erzeugt und kann ähnlich wie ein Heißluft-Fön verwendet werden. Profile können im Durchlauf auch mit Mehrfach-Anordnung der Korona-Düsen, die geschlossen in einem Gehäuse untergebracht sind, behandelt werden. Auf diese Weise können beliebige Profile von allen Seiten vorbehandelt werden.

Eine weitere wichtige Methode der Vorbehandlung steht in der Beflammung. Sie wird wie üblich durchgeführt.

Zweckmäßig ist eine Oberflächenbehandlung mit einem Primer, insbesondere mit einem Primer, wie er in der WO 95/25138 beschrieben ist. Dieser Primer besteht zumindest zu 20 Gew.-% aus OH-funktionellen Polyurethanprepolymeren, die durch Umsetzung von Polyesterpolyolen (I) gegenüber Isocyanaten mindestens zweifach reaktive Verbindungen mit zur Salzbildung befähigten Gruppen (II), Tetramethylxylylendiisocyanat (III). Aminoalkoholen (IV) und ggf. einem Kettenverlängerer erhalten werden. Der Primer eignet sich besonders zum Kaschieren von PVC mit Folien aus PVC, PES, Polyolefinen und Polymethacrylaten. Als Klebstoff wird zweckmäßigerweise ein reaktiver Polyurethanschmelzklebstoff verwendet.

Ein weiterer vorteilhafter Primer basiert auf chlorierten Polyolefinen (Komponente A), denen gegebenenfalls wasseremulgierbare lsocyanate (Komponente B) zugesetzt werden können. Bei Verwendung von isocyanathaltigen Klebstoffen, z.B. Polyurethan-Hotmelt kann auf die Verwendung der isocyanathaltigen Komponente B verzichtet werden.
Als "chlorierte Polyolefine" sind chlorierte Polymerisate der allgemeinen Struktur (-CH₂CR¹R²)ₙ zu verstehen, in der R¹ für Wasserstoff steht und R² für Wasserstoff, eine geradkettige oder verzweigte gesättigte aliphatische bzw. cycloaliphatische Gruppe oder eine ungesättigte Gruppe wie der Phenyl-Rest mit maximal 24, insbesondere 20 C-Atomen. Konkrete derartige Polyolefine sind Polyethylen, Polypropylen, Polybutylen Polyisobuten, Polyhexen, Polyocten, Polydecen und Polyoctadecen sowie Polystyrol. Chlorierte Polyolefine werden erhalten durch Chlorierung dieser Polymerisate und/oder Polymerisation von Monomeren, die bereits Chlor enthalten, z.B. von Vinylchlorid und Vinylidenchlorid. Als chlorierte Polyolefine seien genannt: Chloriertes Polyethylen und chloriertes Polypropylen mit einem Chlorgehalt von ca. 25 bis 50 Gew.-% sowie chloriertes Polyvinylchlorid mit einem Chlorgehalt von ca. 60 bis 70 Gew.-%. Wäßrige Dispersionen von chlorierten Polyolefinen sind zu kaufen, z.B. unter der Bezeichnung "Trapylen®". Die Dispersionen enthalten das chlorierte Polyolefin in einem Feststoffgehalt von ca. 15 bis 30 Gew.-%. Sie sind lagerstabil und enthalten teilweise Lösungsvermittler wie n-Butanol.
Unter "wasseremulgierbaren isocyanaten" sind Ester der. Isocyansäure zu verstehen, die mit Wasser bei Raumtemperatur ohne Katalysatoren praktisch nicht reagieren. Besonders zweckmäßig sind Polyisocyanate mit 2 bis 3 Isocyanatgruppen pro Molekül. Die Isocyanate können auch durch eine vorhergehende Reaktion eines Polyisocyanates mit einem Diol oder einem Diamin im Unterschuß hergestellt werden (Isocyanat-Prepolymere). Als wasseremulgierbare Isocyanate seien genannt: Isocyanat-Biuret, PEGmodifiziertes Hexamethylendiisocyanat; erhältlich von der Firma BASF unter dem Namen Basonat® und Polyisocyanat auf Basis Hexamethylendiisocyanat von der Fa. Bayer unter dem Namen Desmodur DA®.
Zweckmäßigerweise enthält der Primer die Komponenten A und B in einer Konzentration von zusammen 5 bis 30. vorzugsweise 8 bis 20 Gew.-%. Das Verhältnis der Komponenten A und B zueinander kann in weiten Bereichen variieren, z.B. von 80 : 20 bis 20 : 80 Gew.-Teilen der Komponente A bzw. der Komponente B, bezogen auf die Summe der Komponenten A plus B.
Außerdem kann der Primer noch konventionelle thixotropierend, pigmentierend, füllend und/oder stabilisierend wirkende Zusätze enthalten. Von besonderer Bedeutung sind Zusätze, die die Benetzung der wäßrigen Dispersion auf den unpolaren Kunststoffen verbessern sowie Farbstoffe zum Erkennen der Behandlung mit dem erfindungsgemäßen Primer.
Ein derartiger Primer ist in der deutschen Patentanmeldung DE 44 28 382 beschrieben.

Die so vorbehandelte Oberfläche wird beschichtet, und zwar z. B. mit einem Lack oder mit einem Klebstoff, wobei zweckmäßigerweise bei einer Verklebung der Klebstoff auf die zu verklebende Folie aufgetragen wird. Sowohl bei den Lacken als auch bei den Klebstoffen kommen grundsätzlich alle üblichen Stoffgemische in Frage. Bei den Klebstoffen seien beispielhaft genannt Diffusionsklebstoffe auf der Basis von Tetrahydrofuran und 10 bis 20 % PVC, Reaktionsklebstoffe auf der Basis von Epoxiden, Polyurethan, Polymethylmethacrylat oder ungesättigten Polyestem sowie Polyurethan-Schmelzklebstoffe. Bevorzugt sind Polyurethan-Schmelzklebstoffe. Dann kann die Folienkaschierung völlig lösungsmittelfrei gestaltet werden. Zweckmäßigerweise werden reaktive Polyurethan-Schmelzklebstoffe eingesetzt, die mit der Feuchtigkeit aushärten

Die Klebstoffe werden entsprechend der Arbeitsanweisung aufgetragen, z.B. der PU-Schmelzklebstoff mit einer Breitschlitzdüse oder Walze bei Temperaturen von ca. 110 bis 150 °C. Die offene Zeit des Schmelzklebstoffes kann durch Erwärmen verlängert werden, z.B. mit Heißluft. Die mit dem Klebstoff beschichtete Dekor-Folie wird auf die vorbehandelte PVC-Oberfläche gedrückt.

An die Folie werden keine besonderen Anforderungen gestellt weder bezüglich der Dicke noch bezüglich der Art des Polymeren. Die Dicke ist hauptsächlich eine Frage des Preises und der Handhabbarkeit. Die Folie kann sehr dünn sein, d.h. weniger als 0,25 mm dick (= Film). Sie kann aber auch sehr dick sein, d.h. bis 40 mm dick (= Platte). Vorzugsweise liegt die Dicke im Bereich vonn 0,1 bis 1,0 mm. Neben Polyvinylchlorid kommen noch unter anderem folgende Polymere in Frage: Polyester, Polyethylen, Polypropylen, Polyacrylate und Polymethylmethacrylate. Falls PVC- oder Polyolefin-Folien verwendet werden, z.B. aus isotaktischem Polypropylen oder aus PE/PP-Compounds, so können diese analog zum Grundkörper behandelt werden. Die Dekorschicht kann auch durch Aufkaschieren eines Laminates mit einer Metallschicht erhalten werden.

Das Verfahren zur Ummantelung, z.B. eines PVC-Fensterprofils mit einer PVC-Dekorfolie umfaßt also ganz allgemein folgende Stufen:
1. Reinigung des PVC-Fensterprofils unter Verwendung des erfindungsgemäßen alkalischen wäßrigen Reinigungsmittels.
2. Vorzugsweise wird das gereinigte Profil mit mindestens einer der üblichen Vorbehandlungen wie Beflammung, Plasma-Bestrahlung, Korona-Entladung oder Primer-Auftrag aktiviert.
3. Es wird der Klebstoff wie üblich auf die Folie aufgetragen, insbesondere ein feuchtigkeitsreaktiver PU-Schmelzklebstoff.
4. Während der offenen Zeit wird die Dekor-Folie, insbesondere eine Dekor-Folie aus PVC auf das vorbehandelte PVC-Profil aufgedrückt.
5. Der Klebstoff bindet ab.

Auf diese Weise werden Verklebungen erhalten, die nicht nur am Anfang hohe Werte zeigen, sondern auch nach Einwirkung von Wärme und Klimaveränderungen.

Die Erfindung wird nun im einzelnen beschrieben.

### Beispiele

### I. Ausgangsmaterial

1. PVC-Profil: Fensterprofil (weiß) der Firma Thyssen-Polymer
2. PVC-Folie: MBAS, 0,2 mm, der Firma Renolit
3. Klebstoff: Polyurethan-Schmelzklebstoff Purmelt QR 5300® der Firma Henkel KGaA
4. Reinigungsmittel
   a) Lösungsmittelprimer auf der Basis von Methylenchlorid (> 95 %)
   b) Alkalischer Reiniger
      - Alkali: 8 Gew.-% an Kaliumhydroxid, Ethanolamin, Ammoniak
      - Komplexbildner: 2 Gew.-% an NTA-Na, Alanindiensäure-Na
      - Alkohol: 18 Gew.-% an Butylglykol, Phenoxyethanol
      - Tensid: 5 Gew.-% an Fettalkohol + 9 EO
      - Spülhilfsmittel: 4 Gew.-% an Cumolsulfonat
      - sonstige Additive: 2 Gew.-% an Farb-, Duftstoffen
      - Der Rest ist Wässer.
5. Wäßriger Primer: Typ 404® der Firma DORUS Klebetechnik.

### II. Probenherstellung

### 1. Oberflächenbehandlung:

a) Alkalischer Reiniger:
   Ca 20 g/m² des alkalischen Reinigungsmittels wurden mit einem Filz per Hand aufgetragen und nach der Einwirkzeit mit Leitungswasser abgespült. Dann erfolgte die Trocknung durch Abblasen mit warmer Luft. Variiert wurde die Vorbehandlungsmethode sowie die Einwirkzeit und Temperatur des alkalischen Reinigungsmittels (s. Tabelle).
b) Methylenchlorid: Es wurde der Lösungsmittelprimer mit einem Filz per Hand aufgetragen und durch Abblasen mit warmer Luft getrocknet.
c) Beflammung:
   Es wurde das Beflammungs-Gerät der Fa. Agrotec mit folgender Einstellung verwendet: Verhältnis Luft/Propan = 25/1.
d) Korona-Behandlung:
   Es wurde das Korona-Gerät der Fa. Agrodyn mit folgender Einstellung verwendet: Einstellung Impuls-Entladung 20 KV und 40 KHz Frequenz.
e) Wäßriger Primer: Es wurde entsprechend dem Lösungsmittel-Primer aufgetragen.

### III. Verklebung

Die so vorbehandelten Profile wurden unmittelbar nach dieser Behandlung in einer Profilummantelungsmaschine mit einer Folie im Durchlauf verklebt.
Die Herstellung der Probekörper für die im folgenden beschriebenen Versuche erfolgten auf einer Profilummantelungsmaschine der Fa. FRIZ.
Auf diese Maschine wurde über ein Schmelzklebstoff-Rakelgerät der Polyurethan-Schmelzklebstoff auf die Folie aufgetragen. Über ein Rollensystem wird dann die klebstoffbeschichtete Folie auf das vorbehandelte Profil im Durchlauf aufkaschiert. Bei diesen Versuchen wurden folgende Versuchsbedingungen konstant gehalten:
- Vorschub der Profilummantelungsmaschine bei der Folienkaschierung: 20 m/min
- Klebstofftemperatur im Rakel: 130°C
- Oberflächentemperatur des Profiles vor der Verklebung: 50 °C
- Klebstoffauftragsstärke des Rakels: 0,04 mm
Die so erhaltenen Profilteile wurden 7 Tage im Normalklima (20 °C/60 % rel. Luftfeuchte) gelagert damit der verwendete Polyurethan-Schmelzklebstoff bis zur Endfestigkeit ausreagiert. Anschließend wurden an diesen Profilkörpern folgende Prüfungen durchgeführt:

### IV. Klebeeigenschaften

1. Schälfestigkeit: Sie wurde an 20 mm breiten Folienstreifen nach RAL-GZ 716/1, Abschnitt 1, Teil 7 bestimmt.
   a) nach 0 Zyklen Klimawechsel und
   b) nach 20 Zyklen Klimawechsel,
      wobei 1 Zyklus folgende Behandlung beinhaltet:
      8 Std. Lagerung bei 70 °C und 95 % rel. Luftfeuchte
      8 Std. Lagerung bei -20 °C
      8 Std. Lagerung bei 50 °C und 30 % rel. Luftfeuchte.
   2. Visuelle Beurteilung nach einer Lagerung bei 150 °C nach 30 min.
   3. Abkürzungen:
      FR = Folienriß ohne Schälen
      S = Schält
      FA = Folienablösung
   4. Soll-Werte:
      Nach RAL-GZ 716/1, Abschnitt 1, Teil 7 werden an die Beständigkeit der Folienkaschierung folgende Forderungen gestellt:
         - Schälfestigkeit: > 2,5 N/mm
         - Wärmelagerungstest: keine Blasenbildung,
            keine Folienablösung
         - Schälfestigkeit nach künstlicher Bewitterung: > 2,0 N/mm

### V. Ergebnisse:

Bereits eine einfache Reinigung mit dem erfindungsgemäßen Reinigungsmittel ergibt eine bessere Beständigkeit der Verklebung als die bisher bekannten Oberflächenbehandlungen.
Dieser vorteilhafte Effekt wird durch Kombination mit bekannten Oberflächenbehandlungen noch verstärkt.

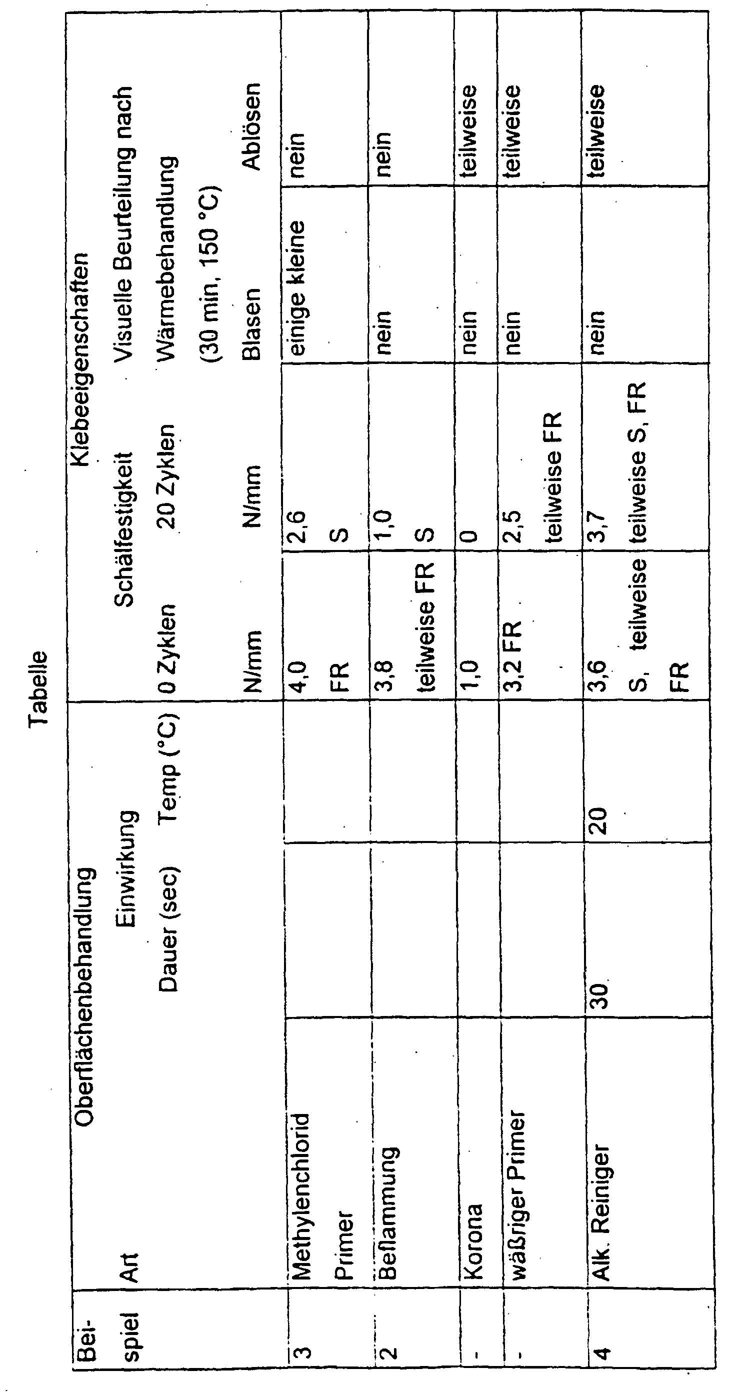

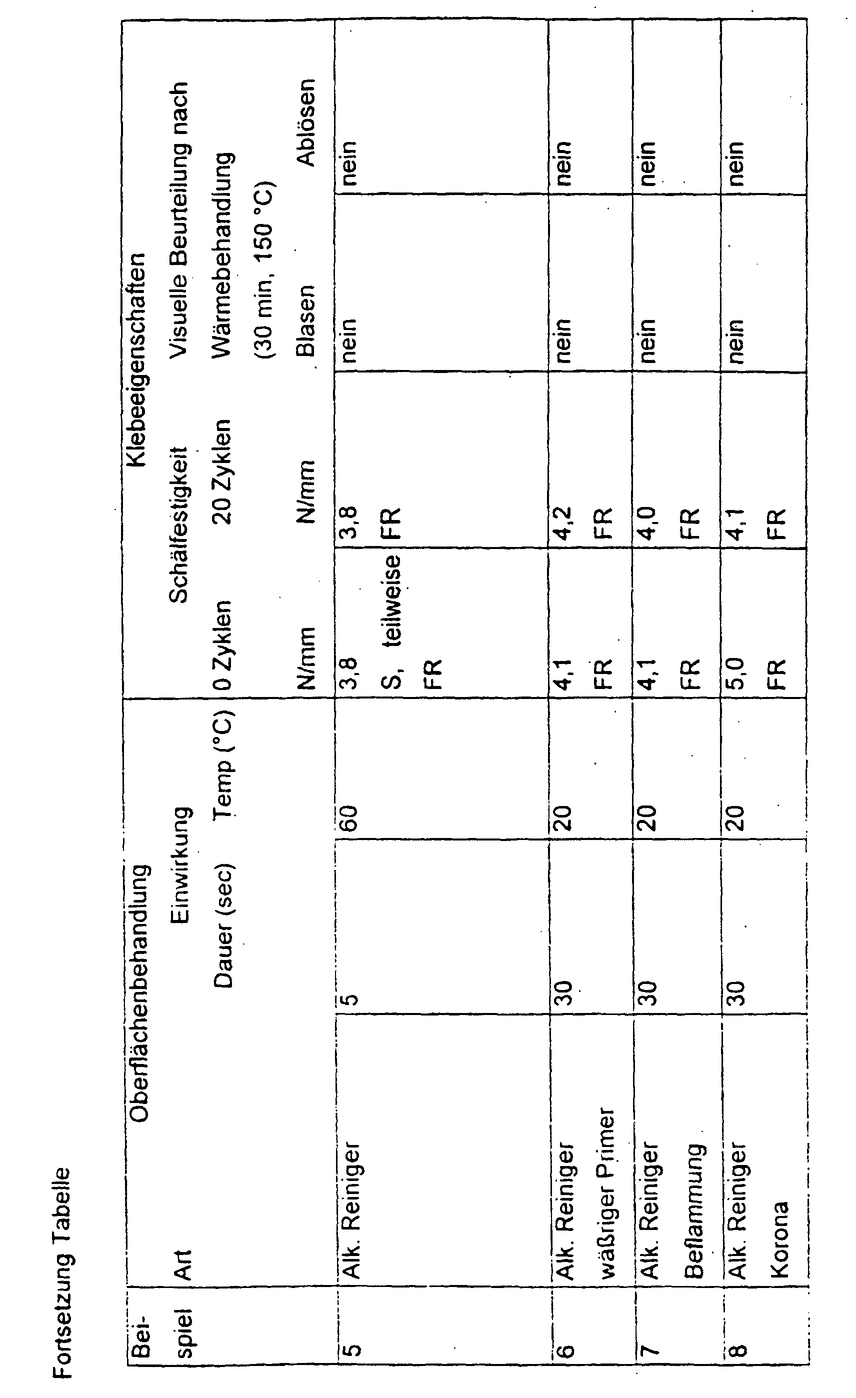

## Patentansprüche

1. Wäßriges alkalisches Reinigungsmittel mit folgender Zusammensetzung:
A) 2 bis 30 Gew.-% einer in wäßrigem Medium alkalisch reagierenden Verbindung,
B) 1 bis 30 Gew.-% eines Komplexbildners,
C) 5 bis 40 Gew.-% einer Verbindung mit zumindest einer Hydroxy-Gruppe ausgewählt aus Alkoholen mit 3 bis 12 C-Atomen im Molekül, Ethern von Polyolen, Ethern von Oligopropylen-Glykolen oder deren Mischungen,
D) 1 bis 15 Gew.-% eines Tensids auf Basis von Fettalkoholen,
E) 1 bis 30 Gew.-% eines Spülhilfsmittels ausgewählt aus Phosphaten, Sulfonaten des Typs Cumol- und Toluol-Sulfonat oder Phosphorsäureestern und
F) 0 bis 8 Gew.-% an wasserlöslichen Farbstoffen und Gerüststoffen.
G) 20 bis 80 Gew.-% an Wasser.

2. Verwendung des Reinigungsmittels nach Anspruch 1 zur Reinigung von PVC-Oberflächen, insbesondere von PVC-Profilen.

3. Verwendung nach Anspruch 2, **dadurch gekennzeichnet, daß** das Reinigungsmittel eine Sekunde bis 30 Minuten lang auf die PVC-Oberfläche einwirkt.

4. Verwendung nach Anspruch 2 oder 3, **dadurch gekennzeichnet, daß** das Reinigungsmittel mit einer Temperatur von 10 bis 80 °C auf die PVC-Oberfläche einwirkt.

5. Verwendung der nach den Ansprüchen 2, 3 oder 4 gereinigten PVC-Oberflächen zum Verkleben.

6. Verwendung nach Anspruch 5, **dadurch gekennzeichnet, daß** PVC-Profile mit oder ohne Oberflächenvorbehandlung und Folien verklebt werden.

7. Verwendung nach Anspruch 5 oder 6, **dadurch gekennzeichnet, daß** die gereinigten PVC-Oberflächen vor dem Verkleben mechanisch, physikalisch, chemisch oder elektro-chemisch vorbehandelt werden, insbesondere durch Auftrag eines Haftvermittlers oder Primers, Beflammung oder durch eine Koronabehandlung.

8. Verwendung nach einem der Ansprüche 5, 6 oder 7, **dadurch gekennzeichnet, daß** der Klebstoff ein feuchtigkeitsreaktiver Polyurethan-Schmelzklebstoff ist.

## Claims

1. A water-based alkaline cleaner having the following composition:
A) 2 to 30% by weight of a compound showing an alkaline reaction in aqueous medium,
B) 1 to 30% by weight of a complexing agent,
C) 5 to 40% by weight of a compound containing at least one hydroxy group selected from alcohols with 3 to 12 carbon atoms in the molecule, ethers of polyols, ethers of oligopropylene glycols or mixtures thereof,
D) 1 to 15% by weight of a surfactant based on fatty alcohols,
E) 1 to 30% by weight of a rinsing aid selected from phosphates, sulfonates of the cumene and toluene sulfonate type or phosphoric acid esters,
F) 0 to 8% by weight of water-soluble dyes and builders and
G) 20 to 80% by weight of water.

2. The use of the cleaner claimed in claim 1 for cleaning PVC surfaces, more particularly PVC profiles.

3. The use claimed in claim 2, **characterized in that** the cleaner acts on the surface for one second to 30 minutes.

4. The use claimed in claim 2 or 3, **characterized in that** the cleaner acts on the PVC surface with a temperature of 10 to 80°C.

5. The use of the PVC surfaces cleaned in accordance with claim 2, 3 or 4 for bonding.

6. The use claimed in claim 5, **characterized in that** PVC profiles are bonded with or without surface pretreatment and films.

7. The use claimed in claim 5 or 6, **characterized in that**, before bonding, the cleaned PVC surfaces are mechanically, physically, chemically or electrochemically pretreated, more particularly by application of a coupling agent or primer, by exposure to a flame or by a corona treatment.

8. The use claimed in any of claims 5, 6 or 7, **characterized in that** the adhesive is a moisture-reactive polyurethane hotmelt adhesive.

## Revendications

1. Détergent alcalin aqueux ayant la composition suivante :
A) de 2 à 30 % en poids d'un composé ayant une réaction alcaline en milieu aqueux,
B) de 1 à 30 % en poids d'un agent complexant,
C) de 5 à 40 % en poids d'un composé comprenant au moins un groupe hydroxy, choisi parmi les alcools dont la molécule comprend de 3 à 12 atomes de carbone, les éthers de polyols, les éthers d'oligopropylène-glycols ou les mélanges de ces composés,
D) de 1 à 15 % en poids d'un tensioactif à base d'alcools gras,
E) de 1 à 30 % en poids d'un adjuvant de rinçage choisi parmi les phosphates, les sulfonates de type cumènesulfonate et toluènesulfonate, ou les esters d'acide phosphorique,
F) de 0 à 8 % en poids d'un colorant hydrosoluble et d'adjuvants de lavage,
G) de 20 à 80 % en poids d'eau.

2. Utilisation du détergent selon la revendication 1, pour le nettoyage de surfaces en PVC, en particulier de profilés en PVC.

3. Utilisation selon la revendication 2, **caractérisée en ce que** la durée d'action du détergent sur la surface en PVC est d'une seconde à 30 minutes.

4. Utilisation selon la revendication 2 ou 3, **caractérisée en ce que** la température d'action du détergent sur la surface en PVC est de 10 à 80°C.

5. Utilisation de surfaces en PVC nettoyées selon la revendication 2, 3 ou 4 pour le collage.

6. Utilisation selon la revendication 5, **caractérisée en ce que** des films sont collés sur des profilés en PVC ayant subi ou non un pré-traitement de surface.

7. Utilisation selon la revendication 5 ou 6, **caractérisée en ce que** les surfaces en PVC nettoyées subissent, avant le collage, un pré-traitement mécanique, physique, chimique ou électrochimique, en particulier par application d'un agent favorisant l'adhérence ou couche de fond, par traitement à la flamme ou traitement corona.

8. Utilisation selon la revendication 5, 6 ou 7, **caractérisée en ce que** la colle est une colle à fusion à base de polyuréthane, réactive à l'humidité.
